# EUROPÄISCHE PATENTSCHRIFT

(11) **EP 0 626 042 B1**
(45) Veröffentlichungstag und Bekanntmachung des Hinweises auf die Patenterteilung: **28.02.1996**
(21) Anmeldenummer: 93900036.0
(22) Anmeldetag: 10.12.1992
(51) Int. Cl.: F16B 25/10

(54) **SELBSTBOHRENDER BEFESTIGER**
SELF-BORING FASTENER
FIXATION AUTOFOREUSE

(30) Priorität: 11.02.1992 DE 4203949
(43) Veröffentlichungstag der Anmeldung: 30.11.1994
(73) Patentinhaber: SFS Industrie Holding AG, CH-9435 Heerbrugg (CH); SFS RHOMBERG Gesellschaft m.b.H., A-6833 Klaus (AT)
(72) Erfinder: KÖPPEL, Norbert, CH-9434 Widnauh (CH)
(74) Vertreter: Ludescher, Hans
(86) Internationale Anmeldenummer: EP9202862
(87) Internationale Veröffentlichungsnummer: WO9316292

(56) Entgegenhaltungen:
- DE-A- 2 801 962
- DE-C- 4 003 374
- DE-C- 4 003 375

## Beschreibung

Die Erfindung betrifft einen selbstbohrenden Befestiger, bestehend aus einem Befestigerkörper mit einem an seinem einen freien Ende ausgebildeten, achsparallelen Schlitz und einem plättchenförmigen, mit seinem einen Ende in den Schlitz am Befestigerkörper eingesetzten Bohreinsatz, wobei der Bohreinsatz durch Verformung der den Schlitz am Befestigerkörper begrenzenden Backen form- und kraftschlüssig verbunden ist.

Es ist bereits eine selbstbohrende Schraube bekannt (DE-C-28 01 962), deren Bohrteil von einem in einen Längsschlitz des Schraubenschaftes eingesetzten Schneideinsatz gebildet ist, wobei an dessen Seitenrändern Auskehlungen vorgesehen sind, in welche der betreffende Randbereich oder Teilbereiche der den Schlitz begrenzenden Backen des Schraubenschaftes zur Bildung einer festen, form- und kraftschlüssigen Verbindung zwischen Schneideinsatz und Schraubenschaft eingedrückt ist bzw. sind. Die entsprechenden Bereiche der Backen werden also in Vertiefungen an der Oberfläche des plättchenförmigen Schneideinsatzes eingedrückt, bis sie am Grund dieser Auskehlung anliegen. Es ist also nur eine geringfügige Verformung der Randbereiche der Backen gegeben, wobei durch die feste Gegenoberfläche am Schneideinsatz keine besonders starke plastische Verformung der Backen erfolgt. Bei jahrelangem Einsatz in der Praxis hat sich gezeigt, daß diese Art der Befestigung des Schneideinsatzes bei bisherigen Einsatzfällen durchaus optimal ist, und daß die erforderliche Verliersicherheit allein durch diese form- und kraftschlüssige Halterung des Schneideinsatzes gegeben ist und ferner das notwendige Drehmoment beim Bohren ordnungemäß übertragen werden kann.

Durch den optimalen Einsatz solcher selbstbohrender Schrauben mit einem plättchenförmigen Schneideinsatz wird der Anwendungsbereich immer größer, und es sollen nicht nur dünne Bleche durchbohrt werden können, was bedingt, daß auch die Bohrtiefen, die von solchen selbstbohrenden Befestigern bewältigt werden sollen, immer größer werden. Um solche selbstbohrende Befestiger auch in dickem Material, also beispielsweise in Stahlträgern mit einer Wanddicke von 8 mm, 12 mm oder noch mehr, einsetzen zu können, müssen die Schneideinsätze um das entsprechende Maß länger ausgebildet sein.

Die vorliegende Erfindung hat sich daher zur Aufgabe gestellt, einen selbstbohrenden Befestiger der eingangs genannten Art zu schaffen, bei welchem auch Schneideinsätze mit größerer axialer Länge ausreichend fest mit dem Befestigerkörper verbunden werden können, ohne daß zusätzliche Schweiß-, Löt- oder Klebeverfahren notwendig sind.

Erfindungsgemäß wird dazu vorgeschlagen, daß der Bohreinsatz an seinem in den Schlitz am Befestigerkörper eingreifenden Endbereich an einer oder beiden seitlichen Begrenzungsflächen eine oder mehrere, über die Dicke des Bohreinsatzes durchgehende Einkerbungen, Einschnitte, Nuten oder Einbuchtungen aufweist, in welche jeweils ein Randbereich des Backens oder die Randbereiche beider Backen des Befestigerkörpers plastisch verformt eingepreßt ist bzw. sind.

Bei Schneideinsätzen mit größerer axialer Länge ist insbesondere das seitliche Auskippen des Schneideinsatzes während des Bohrvorganges problematisch. Durch die erfindungsgemäßen Maßnahmen wird der Schneideinsatz an den beiden einander gegenüberliegenden Schmalseiten form- und kraftschlüssig zwischen den, den Schlitz begrenzenden Backen eingespannt, so daß der Schneideinsatz nicht mehr seitlich auskippen kann.

Wenn die den Schlitz am Befestigerkörper begrenzenden Backen lediglich in Auskehlungen mit geringer Tiefe eingepreßt werden, werden diese Bereiche der Backen nur unwesentlich plastisch verformt und können nach dem Preßvorgang wieder teilweise zurückfedern. Für die Halterung von Schneideinsätzen mit relativ kurzer axialer Länge hat dies jedoch ausgereicht.

Durch die erfindungsgemäßen Maßnahmen wird der entsprechende Randbereich der Backen in die über die Dicke des Bohreinsatzes durchgehende Einbuchtung plastisch verformt eingepreßt, so daß keine federnde Rückstellung mehr möglich ist. Es hat sich bei Versuchen gezeigt, daß die erfindungsgemäßen Maßnahmen zumindest eine Verdoppelung des Ausscherwertes mit sich bringen. Damit konnte durch die vorliegende Erfindung eine Möglichkeit geschaffen werden, die für einen Bohrvorgang an sich optimalen plättchenförmigen Schneideinsätze auch zum Bohren in relativ dicken Materialien einsetzen zu können, ohne daß zusätzliche Bearbeitungsmaßnahmen wie Schweißen, Löten oder Kleben notwendig wären.

Die plastisch in die Einkerbungen, Einschnitte, Nuten oder Einbuchtungen eingepreßten Abschnitte der Backen bilden sozusagen Verankerungslappen, die den Schneideinsatz gegen ein seitliches Auskippen sichern.

Bei der einfachsten Ausführungsform wird vorgesehen, daß die Einkerbungen, Einschnitte, Nuten oder Einbuchtungen an beiden seitlichen Begrenzungsflächen des Bohreinsatzes spiegelbildlich zueinander angeordnet sind. Die plastisch verformt eingepreßten Bereiche der Backen liegen also jeweils auf gleicher axialer Höhe, was bearbeitungstechnisch an sich von Vorteil ist, da die Zuführung der Schneideinsätze für den Preßvorgang problemloser ist, da ja die Schneideinsätze an beiden Seitenrändern gleich ausgebildet sind. Dabei ist es auch gleichgültig, ob nun an beiden seitlichen Begrenzungsflächen jeweils eine Einbuchtung oder dergleichen oder zwei oder mehrere solcher Einbuchtungen vorgesehen sind.

Für besondere Einsatzzwecke kann es vorteilhaft sein, wenn die Einkerbungen, Einschnitte, Nuten oder Einbuchtungen an beiden seitlichen Begrenzungsflächen des Bohreinsatzes versetzt zueinander angeordnet sind. Dann ist allerdings bei der Fertigung des selbstbohrenden Befestigers eine geordnete, lagerichtige Zuführung des plättchenförmigen Bohreinsatzes in Übereinstimmung mit der Ausbildung des entsprechenden Preßwerkzeuges notwendig.

Sowohl für die Herstellung des plättchenförmigen Bohreinsatzes als auch für eine gute Halterung nach dem Preßvorgang ist es zweckmäßig, wenn die Einkerbungen, Einschnitte, Nuten oder Einbuchtungen im Querschnitt kreisbogenförmig begrenzt sind. Es ergibt sich dadurch infolge des Preßvorganges und der plastischen Verformung des entsprechenden Randbereiches eines Backens ein optimal ausgeformter Verankerungslappen, welcher ein seitliches Auskippen des Bohreinsatzes verhindert.

Bei einer weiteren Ausführungsvariante ist vorgesehen, die bisherige konstruktive Ausbildung eines plättchenförmigen Bohreinsatzes mit den erfindungsgemäßen Merkmalen zu kombinieren, um dadurch eine noch verbesserte Verankerung gegen seitliches Auskippen des Schneideinsatzes zu erzielen. Bei einer solchen Ausführung wird vorgeschlagen, daß an beiden Seitenbegrenzungen des Bohreinsatzes an gegenüberliegenden Oberflächen Auskehlungen ausgebildet sind, wobei im Bereich dieser Auskehlungen die über die Dicke des Bohreinsatzes durchgehenden Einkerbungen, Einschnitte, Nuten oder Einbuchtungen vorgesehen sind.

Gerade im Zusammenhang mit dieser konstruktiven Variante ist es vorteilhaft, wenn die Auskehlungen mit geringem Abstand vom Ende des Bohreinsatzes beginnen und sich über einen Großteil der Länge des in den Schlitz eingesetzten Abschnittes des Bohreinsatzes erstrecken. Durch die beidendig begrenzte Länge dieser Auskehlung wird ein zusätzlicher Halteeffekt des Bohreinsatzes im Schlitz des Befestigerkörpers erzielt.

Gemäß einer weiteren Ausführungsvariante ist es auch möglich, zusätzlich zu dieser besonderen form- und kraftschlüssigen Verbindung zwischen dem Befestigerkörper und dem Bohreinsatz eine optimale achsgleiche Zentrierung zwischen Bohreinsatz und Befestigerkörper bereits vor dem Preßvorgang zu erzielen. Zu diesem Zweck wird vorgeschlagen, daß der Bohreinsatz an seinem einen Ende einen Fortsatz mit geringerer Breite aufweist, welcher zentrierend in eine an den Schlitz im Befestigerkörper anschließende, mittige Öffnung eingreift. Es ist also bereits bei der Vormontage eine zentrierte Ausrichtung zwischen Bohreinsatz und Befestigerkörper gegeben, welche dann durch den Preßvorgang optimal gesichert wird.

Die Erfindung wird in der nachstehenden Beschreibung anhand eines Ausführungsbeispieles näher erläutert. Es zeigen:

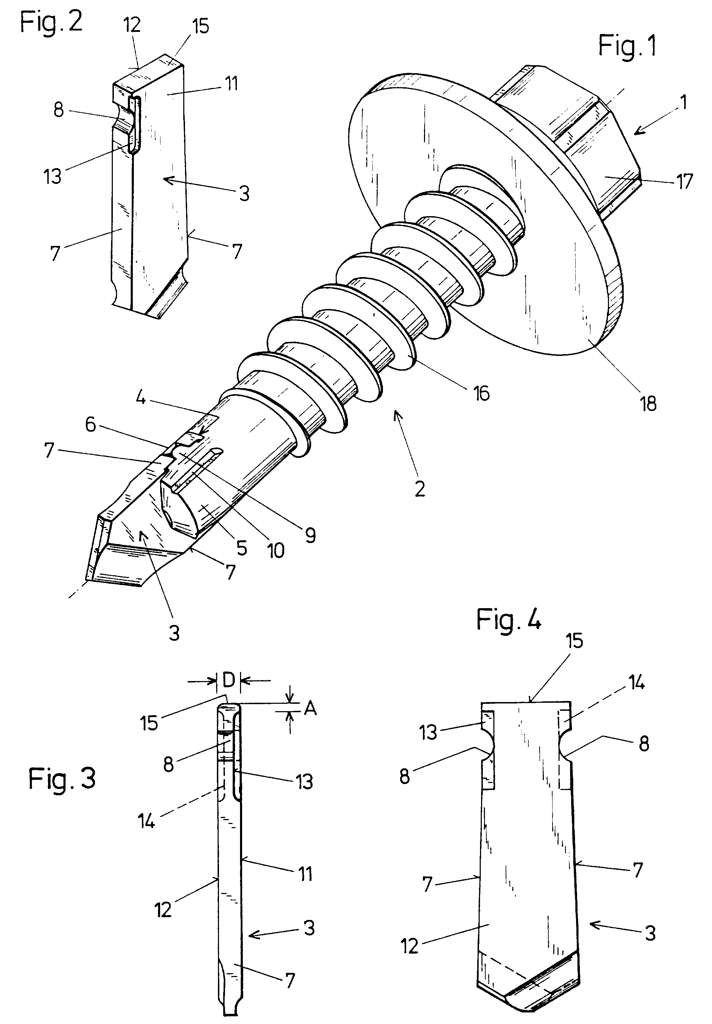

Fig. 1 eine Schrägsicht einer Bohrschraube;
Fig. 2 eine Schrägsicht eines Bohreinsatzes;
Fig. 3 eine Seitenansicht des Bohreinsatzes;
Fig. 4 eine Frontansicht desselben.

Die Erfindung wird anhand einer selbstbohrenden und -gewindeschneidenden Schraube näher erläutert. Die erfindungsgemäßen Maßnahmen sind aber auf alle selbstbohrenden Befestiger anwendbar, also z.B. auch auf selbstbohrende Blindniete, wo der Schneideinsatz mit dem Nietdorn und/oder der Niethülse in Wirkverbindung steht, oder bei selbstbohrenden Dübeln.

Der in der Zeichnung dargestellte selbstbohrende Befestiger 1 besteht im wesentlichen aus einem Befestigerkörper 2 und einem plättchenförmigen Bohreinsatz 3. Der Bohreinsatz 3 ist in einen Schlitz 4 am einen freien Ende des Befestigerkörpers 2 eingesetzt und zwischen den, den Schlitz 4 begrenzenden Backen 5, 6 form- und kraftschlüssig gehalten.

Der Bohreinsatz 3 weist an seinem in den Schlitz 4 eingreifenden Endbereich an seinen seitlichen Begrenzungsflächen 7 über die Dicke D des Bohreinsatzes 3 durchgehende Einbuchtungen 8 auf. Nach dem Einsetzen des Bohreinsatzes 3 in den Schlitz 4 des Befestigerkörpers 2 werden die seitlichen Randbereiche der Backen 5, 6 durch einen Preßvorgang verformt, wobei sich Teilbereiche der Backen 5, 6 plastisch in die Einbuchtungen 8 des Bohreinsatzes 3 einformen und sozusagen Verankerungslappen 9 bilden. Nach dem durchgeführten Preßvorgang ist an der Oberfläche der Backen 5 und 6 eine entsprechende Kerbe 10 sichtbar. Durch diesen streifenförmigen Ansatz des Preßwerkzeuges ergibt sich im Gegensatz zu einem vollflächigen Verpressen eine leichtere Verformbarkeit des Randbereiches der Backen 5, 6. Daher sind für den Preßvorgang auch geringere Kräfte notwendig.

Es ist möglich, jeweils einen seitlichen Randbereich der Backen 5, 6 entsprechend zu verformen, so daß an den gegenüberliegenden seitlichen Begrenzungsflächen des Bohreinsatzes 3 jeweils ein Verankerungslappen 9 des einen bzw. des anderen Bakkens eingreift. Denkbar ist es aber auch, diese Verformung lediglich von einem Bakken 5 oder 6 her durchzuführen, so daß also die beiden in die Einbuchtungen 8 eingreifenden Verankerungslappen an einem Backen 5 oder 6 gebildet werden, wogegen der gegenüberliegende Backen lediglich an der Oberfläche des Schneideinsatzes 3 anliegt. Im Rahmen der Erfindung ist es jedoch auch möglich, beide Backen 5 und 6 an beiden seitlichen Randbereichen entsprechend zu verformen, so daß jeweils zwei gegeneinander gerichtete Verankerungslappen in jede Einbuchtung 8 am Schneideinsatz 3 eingreifen.

Der in der Zeichnung dargestellte Schneideinsatz 3 weist ferner an beiden Seitenbegrenzungen an gegenüberliegenden Oberflächen 11, 12 Auskehlungen 13, 14 auf, wobei solche Auskehlungen 13, 14 auch an jeder Oberfläche 11 und 12 beidseitig, also an beiden Randbereichen vorgesehen werden können. Bei Anordnung solcher Auskehlungen 13, 14 ist es vorteilhaft, wenn diese mit geringem Abstand A vom Ende 15 des Bohreinsatzes 3 beginnen und sich über einen Großteil der Länge des in den Schlitz 4 eingesetzten Abschnittes des Bohreinsatzes 3 erstrecken. Durch diese Auskehlungen 13, 14 ist eine zusätzliche Verbesserung des form- und kraftschlüssigen Verbundes zwischen dem Befestigerkörper 2 und dem Bohreinsatz 3 gegeben.

Bei der gezeigten Ausführung ist jeweils an beiden seitlichen Begrenzungsflächen 7 des Schneideinsatzes 3 je eine Einbuchtung 8 vorgesehen, wobei diese beiden Einbuchtungen 8 spiegelbildlich zueinander angeordnet sind. Im Rahmen der Erfindung ist es durchaus möglich, die Einbuchtungen 8 an beiden seitlichen Begrenzungsflächen 7 des Bohreinsatzes 3 in axialer Richtung versetzt zueinander anzuordnen. Wenn ein Preßwerkzeug eingesetzt wird, welches eine geradlinige Ansatzfläche aufweist, bedeutet dies für die Fertigung keinerlei Mehraufwand, da die Verankerungslappen 9 eben dort durch plastische Verformung hergestellt werden, wo die entsprechenden Einbuchtungen 8 angeordnet sind. Es bedarf dann also keiner besonderer Preßwerkzeuge. Ferner ist auch dann keine exakt lagegenaue Zuführung der Bohreinsätze 3 notwendig. Wenn jedoch spezielle Preßwerkzeuge eingesetzt sind, welche abgestimmt auf die Einbuchtungen 8 vorspringende Teile aufweisen, ist auf eine lagerichtige Zuführung der Bohreinsätze 3 zu achten. Bisher wurde nur von beidseitig an den seitlichen Begrenzungsflächen 7 angeordneten Einbuchtungen 8 gesprochen.

Es wäre auch denkbar, diese Einbuchtungen 8 lediglich einseitig an einer seitlichen Begrenzungsfläche 7 vorzusehen, wenn eine ausreichende Gegenhalterung beispielsweise durch eine entsprechend tiefe Auskehlung 13 oder 14 möglich ist. Für eine optimale Verankerung gegen ein seitliches Auskippen des Bohreinsatzes 3 ist es aber immer zweckmäßig, beidseitig an den seitlichen Begrenzungsflächen 7 des Bohreinsatzes 3 entsprechende Einbuchtungen 8 vorzusehen. Weiters wäre es denkbar, an einer oder beiden seitlichen Begrenzungsflächen 7 des Bohreinsatzes 3 mehr als eine solche Einbuchtung 8 vorzusehen.

Die Einbuchtung 8 ist bei der in der Zeichnung dargestellten Ausführungsform im Querschnitt kreisbogenförmig begrenzt. Dies ist aus stanztechnischen Gründen und auch für einen guten Eingriff der beim Preßvorgang gebildeten Verankerungslappen 9 vorteilhaft. Es wäre im Rahmen der Erfindung aber auch möglich, die Einbuchtungen 8 mit einer anderen Querschnittsform bzw. Oberflächengestaltung oder beispielsweise mit einer entsprechend größeren axialen Länge auszuführen.

Eine weitere konstruktive Variante sieht vor, den Bohreinsatz an seinem einen Ende 15 mit einem Fortsatz auszubilden, welcher gegenüber der sonstigen Breite des Bohreinsatzes 3 eine geringere Breite aufweist. Es sind dann allerdings auch beim Befestigerkörper 2 zusätzliche Maßnahmen erforderlich, d.h., daß anschließend an den Schlitz im Befestigerkörper 2 eine mittige Öffnung vorzusehen ist, in welche dann der Fortsatz des Bohreinsatzes 3 zentrierend eingesetzt werden kann. Damit ist die Möglichkeit gegeben, bereits vor dem Preßvorgang eine zentrierte, achsgleiche Ausrichtung des Befestigerkörpers 2 und des Bohreinsatzes 3 zu gewährleisten.

Die Ausbildung des Gewindes 16 bzw. des Kopfes 17 des Befestigerkörpers 2 und die Anordnung oder Nichtanordnung einer Unterlegscheibe 18 haben mit der vorliegenden Erfindung keinen Zusammenhang. Diese Teile wurden jedoch zur deutlicheren Darstellung eines selbstbohrenden Befestigers in der Zeichnung ebenfalls gezeigt.

In der Beschreibung wurde lediglich von Einbuchtungen 8 gesprochen. Je nach Form und Ausgestaltung können anstelle solcher Einbuchtungen auch Einkerbungen, Einschnitte, Nuten oder dergleichen mit eventuell je nach Einsatzzweck besonderer Querschnittsform vorgesehen werden.

Bei selbstbohrenden Befestigern wird in der Regel davon ausgegangen, daß der Schneideinsatz 3 aus einem Bohrstahl bzw. einem Hartmetall und der Befestigerkörper aus einem anderen Stahl bzw. aus nichtrostendem Stahl gefertigt ist. Es wäre durchaus denkbar, einen erfindungsgemäßen Bohreinsatz auch bei Befestigerkörpern aus anderen Metallen, z.B. Messing, oder aber bei Befestigerkörpern aus Kunststoff, Gußteilen oder dergleichen einzusetzen. Bei Befestigerkörpern aus Kunststoff ist die form- und kraftschlüssige gegenseitige Verankerung von Befestigerkörper 2 und Bohreinsatz 3 durch einen Preßvorgang mit Wärmeeinwirkung möglich.

## Patentansprüche

1. Selbstbohrender Befestiger (1), bestehend aus einem Befestigerkörper (2) mit einem an seinem einen freien Ende ausgebildeten, achsparallelen Schlitz (4) und einem plättchenförmigen, mit seinem einen Ende in den Schlitz (4) am Befestigerkörper (2) eingesetzten Bohreinsatz (3), wobei der Bohreinsatz (3) durch Verformung der den Schlitz (4) am Befestigerkörper (2) begrenzenden Backen (5, 6) form- und kraftschlüssig verbunden ist, dadurch gekennzeichnet, daß der Bohreinsatz (3) an seinem in den Schlitz (4) am Befestigerkörper (2) eingreifenden Endbereich an einer oder beiden seitlichen Begrenzungsflächen (7) eine oder mehrere, über die Dicke (D) des Bohreinsatzes (3) durchgehende Einkerbungen, Einschnitte, Nuten oder Einbuchtungen (8) aufweist, in welche jeweils ein Randbereich eines Backens (5, 6) oder die Randbereiche beider Backen (5, 6) des Befestigerkörpers (2) plastisch verformt eingepreßt ist bzw. sind.

2. Selbstbohrender Befestiger nach Anspruch 1, dadurch gekennzeichnet, daß die Einkerbungen, Einschnitte, Nuten oder Einbuchtungen (8) an beiden seitlichen Begrenzungsflächen (7) des Bohreinsatzes (3) spiegelbildlich zueinander angeordnet sind.

3. Selbstbohrender Befestiger nach Anspruch 1, dadurch gekennzeichnet, daß die Einkerbungen, Einschnitte, Nuten oder Einbuchtungen (8) an beiden seitlichen Begrenzungsflächen (7) des Bohreinsatzes (3) versetzt zueinander angeordnet sind.

4. Selbstbohrender Befestiger nach einem der Ansprüche 1 bis 3, dadurch gekennzeichnet, daß die Einkerbungen, Einschnitte, Nuten oder Einbuchtungen (8) im Querschnitt kreisbogenförmig begrenzt sind.

5. Selbstbohrender Befestiger nach Anspruch 1 und einem der Ansprüche 2 bis 4, dadurch gekennzeichnet, daß an beiden Seitenbegrenzungen des Bohreinsatzes (3) an gegenüberliegenden Oberflächen (11, 12) Auskehlungen (13, 14) ausgebildet sind, wobei im Bereich dieser Auskehlungen (13, 14) die über die Dicke (D) des Bohreinsatzes durchgehenden Einkerbungen, Einschnitte, Nuten oder Einbuchtungen (8) vorgesehen sind.

6. Selbstbohrender Befestiger nach Anspruch 5, dadurch gekennzeichnet, daß die Auskehlungen (13, 14) mit geringem Abstand (A) vom Ende (15) des Bohreinsatzes (3) beginnen und sich über einen Großteil der Länge des in den Schlitz (4) eingesetzten Abschnittes des Bohreinsatzes (3) erstrecken.

7. Selbstbohrender Befestiger nach Anspruch 1 und einem der Ansprüche 2 bis 6, dadurch gekennzeichnet, daß der Bohreinsatz (3) an seinem einen Ende (15) einen Fortsatz mit geringerer Breite aufweist, welcher zentrierend in eine an den Schlitz (4) im Befestigerkörper (2) anschließende, mittige Öffnung eingreift.

## Claims

1. A self-boring fastener (1), comprising a fastener body (2) with an axially parallel slot (4) formed at its free end, and a lamellar drill bit (3) inserted at one end into the slot (4) in the fastener body (2), wherein the drill bit (3) is connected in a form-locking and force-locking manner by deformation of the jaws (5, 6) defining the slot (4) in the fastener body (2), characterised in that in its end region engaging in the slot (4) in the fastener body (2) the drill bit (3) has on one or both lateral boundary surfaces (7) one or more notches, indentations, grooves or recesses (8) extending across the thickness (D) of the drill bit (3) and into which respectively is/are pressed under plastic deformation a peripheral zone of one jaw (5, 6) or the peripheral zones of both jaws (5, 6) of the fastener body (2).

2. A self-boring fastener according to Claim 1, characterised in that the notches, indentations, grooves or recesses (8) are arranged mirror-inverted with respect to one another on both lateral boundary surfaces (7) of the drill bit (3).

3. A self-boring fastener according to Claim 1, characterised in that the notches, indentations, grooves or recesses (8) are arranged offset with respect to one another on both lateral boundary surfaces (7) of the drill bit (3).

4. A self-boring fastener according to any one of Claims 1 to 3, characterised in that the notches, indentations, grooves or recesses (8) are bounded in a circular arc in cross-section.

5. A self-boring fastener according to Claim 1 and any one of Claims 2 to 4, characterised in that channels (13, 14) are formed on both lateral boundaries of the drill bit (3) on opposing surfaces (11, 12), wherein the notches, indentations, grooves or recesses (8) extending across the thickness (D) of the drill bit are provided in the vicinity of these channels (13, 14).

6. A self-boring fastener according to Claim 5, characterised in that the channels (13, 14) start at a small distance (A) from the end (15) of the drill bit (3) and extend over a majority of the length of the portion of the drill bit (3) inserted into the slot (4).

7. A self-boring fastener according to Claim 1 and any one of Claims 2 to 6, characterised in that at one end (15) the drill bit (3) has an extension of narrower width, which engages so as to be centred in a coaxial opening adjoining the slot (4) in the fastener body (2).

## Revendications

1. Fixation autotaraudeuse (1), constituée d'un corps (2) présentant à son extrémité libre une fente parallèle à l'axe ainsi qu'un insert de perçage (3) en forme de plaquette emmanchée par une extrémité dans la fente (4) du corps (2), cet insert étant maintenu par une liaison par la force et par la forme, par les joues ou mâchoires (5, 6) du corps (2) délimitant la fente (4), caractérisée en ce que l'insert de perçage (3), vers son extrémité en prise dans la fente (4) du corps (2), le long d'une des deux faces (7), qui le délimitent latéralement, présente sur toute son épaisseur (D) une ou plusieurs encoches entaillées, rainures ou dentelures (8) dans lesquelles la (ou les) zones(s) de l'une ou des deux joues (5, 6) qui le(s) borde(nt) est (sont) engagée(s) par déformation plastique.

2. Fixation autotaraudeuse selon la revendication 1, caractérisée en ce que les encoches entaillées, rainures ou dentures (8) sont symétriques les unes par rapport aux autres , d'une face latérale (7) de l'insert (3) à l'autre.

3. Fixation autotaraudeuse selon la revendication 1, caractérisée en ce que les encoches, entailles, rainures ou dentelures (8) sont décalées les unes par rapport aux autres, sur les deux faces latérales (7) de l'insert (3).

4. Fixation autotaraudeuse selon une des revendications 1 à 3, caractérisée en ce que les encoches, entailles, rainures ou dentelures (8) ont une section en arc de cercle.

5. Fixation autotaraudeuse selon la revendication 1 et une des revendications 2 à 4, caractérisée en ce qu'elle comporte le long des bords latéraux de l'insert de perçage (3) sur les faces opposées (11, 12), des gorges (13, 14) au niveau desquelles sont prévues les encoches, entailles, rainures et dentelures (8) s'étendant sur l'épaisseur (D) de l'insert.

6. Fixation autotaraudeuse selon la revendication 5, caractérisée en ce que les gorges (13, 14) commencent à faible distance (A) de l'insert de perçage et s'étendent sur une grande partie de la longueur de l'engagement de l'insert (3) dans la fente (4).

7. Fixation autotaraudeuse selon la revendication 1 et une des revendications 2 à 6, caractérisée en ce que l'insert de perçage (3) comporte à une de ses extrémités un appendice de faible largeur venant en prise de centrage avec une ouverture axiale débouchant sur la fente (4) du corps (2) de la fixation.
